# EUROPEAN PATENT APPLICATION

(11) **EP 1 312 966 A1**
(43) Date of publication of application: **21.05.2003**
(21) Application number: 02257825.6
(22) Date of filing: 12.11.2002
(51) Int. Cl.: G02B 26/02, G02B 5/20

(54) **An electrically switched optical filter**

(30) Priority: 13.11.2001 US 10495
(71) Applicant: Raytheon Company, El Segundo, California 90245 (US)
(72) Inventor: Richards, Chet L., Thousand Oaks, CA 91362 (US)
(74) Representative: Jackson, Richard Eric

(57) **Abstract**

An electrically switched device wherein arbitrary optical filters can be rapidly switched into, or out of, an optical path. The switchable filter includes a prism substrate (106), a moveable filter plate (108) with a switchable gap (112) between it and a wall (150) of the prism, and a mechanism (512) for moving the filter plate (108) into and out of contact with the prism (106). When the moveable filter plate (108) is sufficiently far from the prism (106), a ray of light (102) traversing through the prism (106) is totally reflected from the prism's wall (150) and there is no filtering of the light. When the filter plate (108) is brought into contact with the prism wall (150), such that the gap (112) between them is negligible, the ray of light (102) passes through the prism wall and into the filter plate (108). The plate (108) then modifies the light spectrum and returns the light back to the prism (106) where it further reflects and then passes out of the prism toward the point of focus.

## Description

### BACKGROUND OF THE INVENTION

### Field of the Invention:

The present invention relates to optical systems. More specifically, the present invention relates to switchable optical filters.

### Description of the Related Art:

In modem optical sensor design, there is a need to change wavebands for observational purposes. For certain applications, it may be necessary or desirable to be able to change the filter characteristics of a focal plane to observe different wavebands.

Conventionally, this is achieved by physical replacement of a first filter with a second filter, usually using a mechanical arrangement such as a filter wheel. Filter wheels, however, have many disadvantages. For example, filter wheels tend to be bulky, cumbersome devices. Accordingly, it is typically difficult to assemble a filter wheel in a compact device.

In infrared applications, filter wheels are often problematic with respect to heat transfer inasmuch as filter wheels provide a source of parasitic heat loads to very cold cavities. The filters themselves can transfer thermal energy to the focal plane and reduce the performance of the system.

Furthermore, filter wheels are slow. This is unfortunate for certain applications for which there is a need for a rapid filter switching capability. One such application involves defense against laser jamming. In this application, a laser beam may be expected to be used to eliminate a sensor. In this case, the filters must be rapidly switched in order to protect the focal plane from the laser jammer.

Hence, a need exists in the art for a device for switching optical filters which is compact and fast with reduced mechanical and thermal disturbances relative to conventional filter wheels.

### SUMMARY OF THE INVENTION

The need in the art is addressed by the present invention, which provides an electrically switched device wherein optical filters can be rapidly switched into, or out of, an optical path. The switchable filter includes a prism substrate, a moveable filter plate with a switchable gap between it and a wall of the prism, and a mechanism for moving the filter plate into and out of contact with the prism. When the moveable filter plate is sufficiently far from the prism, a ray of light traversing through the prism is totally reflected from the prism wall and there is no filtering of the light. When the filter plate is brought into contact with the prism wall, such that the gap between them is negligible, the ray of light passes through the prism wall and into the filter plate. The plate then modifies the light spectrum and returns the light back to the prism where it further reflects and then passes out of the prism toward the point of focus.

### BRIEF DESCRIPTION OF THE DRAWINGS

Fig. 1a is an illustration of the process of total internal reflection in accordance with the present teachings.
Fig. 1b is an illustration of the process of frustrated total internal reflection in accordance with the present teachings.
Fig. 2 is a block diagram of a switchable filter in its off state designed in accordance with the teachings of the present invention.
Fig. 3 is a block diagram of a switchable filter in a first on state designed in accordance with the teachings of the present invention.
Fig. 4 is a block diagram of a switchable filter in a second on state designed in accordance with the teachings of the present invention.
Fig. 5 is a block diagram of an alternative embodiment of a switchable filter with a collimated lens designed in accordance with the teachings of the present invention.
Fig. 6 is a block diagram of an alternative embodiment of a switchable filter with a two stage cascade designed in accordance with the teachings of the present invention.
Fig. 7 is a block diagram of an alternative embodiment of a switchable filter with filter plate support designed in accordance with the teachings of the present invention.
Fig. 8 is a block diagram of an alternative embodiment of a switchable filter with an actuator and vacuum housing designed in accordance with the teachings of the present invention.

### DESCRIPTION OF THE INVENTION

Illustrative embodiments and exemplary applications will now be described with reference to the accompanying drawings to disclose the advantageous teachings of the present invention.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

The present invention provides an electrically switched device wherein arbitrary optical filters can be switched into, or out of, an optical path. With this invention, high-resolution frame sequential color imaging (and projection) is now practical and should be relatively inexpensive. Furthermore, the invention is inherently rugged and is therefore well suited to harsh physical environments,

The invention makes use of the optical principle of frustrated total internal reflection by which light, propagating within a medium of high index of refraction, strikes the wall of the medium at a grazing angle and is thereby completely reflected. Typically this occurs within a prism when the light strikes an appropriately angled surface.

In accordance with the present teachings, a separate, moveable plate of high index of refraction is brought very nearly into contact with the reflecting surface of the prism, the reflection is no longer total and part of the light and will leak across the small gap into the moveable plate. If the index of refraction of the moveable plate matches that of the prism and the plate actually makes full contact, then the light will pass completely out of the prism and into the contacting plate. The light will then totally reflect off the back surface of the contacting plate and pass back, across the negligible gap, into the prism. In effect, the moveable plate has temporarily become an extension of the wall of the prism.

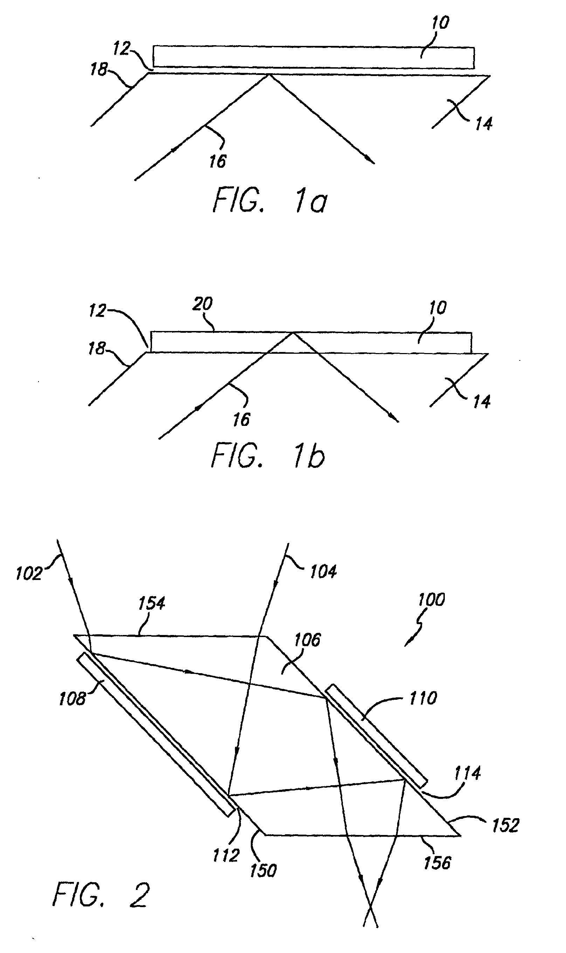

This process is illustrated by Fig. 1. Fig. 1a is an illustration of the process of total internal reflection in accordance with the present teachings. A multi-wavelength gap 12 is between a moveable filter plate 10 and a prism substrate 14. In Fig. 1a, a moveable plate 10 is positioned sufficiently far from a wall of the prism 18 such that a ray of light 16 traversing through the prism is totally reflected thereby.

Fig. 1b is an illustration of the process of frustrated total internal reflection in accordance with the present teachings. In Fig. 1b, the gap 12 between the moveable plate 10 and the prism 14 is closed to eliminate the total internal reflection. The ray of light 16 passes through the interface 18 and reflects off the back surface 20 of the moveable plate 10. In effect, by making and breaking contact between the moveable plate and the prism substrate, the path of light can be switched into, and out of, the moveable plate.

In accordance with present teachings, this property is used to create a switchable optical filter by depositing a multilayer spectral filter on the back surface of the moveable plate. Alternatively, the filter could be made from a selectively absorbing material so that only specific wavelengths can pass through the moveable plate.

Total internal reflection is (partially) frustrated only when the moveable surface is brought within roughly one wavelength of the reflecting substrate. The actual transmission and reflectance at the gap is a sensitive function of the index of refraction and the angle of incidence. Calculations indicate that, for a typical case where the index of refraction is 1.5 and the angle of incidence is 45 degrees, and the gap is a wavelength, then only about 1% of the light leaks across the gap and 99% is reflected. Thus, the gap must be much smaller than a wavelength for the reflection to be substantially frustrated. If the gap is reduced to 1/100^{th} wavelength, the reflection at the interface will still be more than 4% of the incident light. Therefore, it is very important for the moveable plate to be brought very close to the prism substrate if substantially all of the light is to leak through the interface.

In practice, this means that both the prism surface and the filter plate surface must be ground and polished exceedingly flat, so that the gap when the plate is in contact will be less that 1/100^{th} wavelength.

An alternative approach to achieving frustrated total internal reflection is to make the gap out of electro-optically active material. In this case, the gap is filled with a material whose index of refraction changes as a function of an applied electric field. For most materials, the index changes by only a small amount even with a high electric field strength. Thus, the optical design of such a device is substantially restricted compared to using a moveable plate.

Figures 2 through 4 illustrate the switching states of a switchable filter designed in accordance with the teachings of the present invention. The switchable filter 100 includes a prism substrate 106, a first moveable filter 108 with a gap 112 between it and a first wall 150 of the prism, and a second moveable filter 110 with a gap 114 between it and a second wall 152 of the prism. The first wall 150 is opposite the second wall 152. Light rays 102 and 104 enter the prism at an entrance wall 154, and exit at an exit wall 156.

The prism substrate 106 can be made of any material which transmits light. In the preferred embodiment, the prism substrate 106 is made of optical grade glass with a high index of refraction. The prism surface and the filter plate surface at each prism-filter plate interface must be ground and polished flat in accordance with conventional optical polishing techniques, such that the gap when the plate is in contact will be less that 1/100^{th} wavelength. There should be no coatings on the prism surface or the filter plate surface at each prism-filter plate interface. The other surfaces can, but are not required, to have coatings.

Any filtering mechanism can be used for the moveable filter. In the preferred embodiment, a multi-layer thin-film filter is deposited on the back surface of a moveable plate. The moveable plate can be made of any material which transmits light. When designing the filter, it is important to remember that the beam of light will be coming in at a grazing angle to the surface of the filter, rather than perpendicular to the surface. The thickness of the layers on the filter needs to be adjusted to accommodate this angle of incidence and reflection. An alternative filtering method is to use absorption filters where chemicals that absorb particular parts of the spectrum are applied to the moveable plate.

In the illustrative embodiment, the switchable filter includes 2 moveable filter plates 108 and 112. The present invention, however, is not limited to having 2 filter plates. Any number of filter plates can be applied.

Fig. 2 shows the situation when both filter plates 108 and 110 are withdrawn from the prism substrate 106. The incident light is illustrated to be converging, the assumption being that the light has been focused by a lens. The rays of light 102 and 104 reflect twice off the prism walls and then pass out of the prism just as if the filter plates did not exist. In this case, there is no wavelength dependent filtering of the light and the light retains its original color spectrum profile.

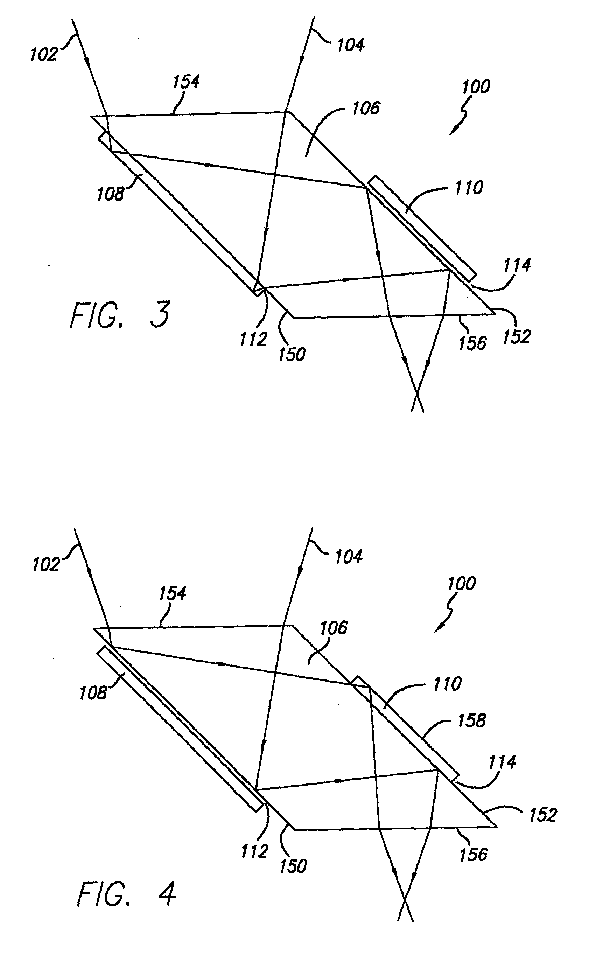

Fig. 3 shows the situation when the first filter plate 108 is brought into contact with the prism wall 150, such that the gap 112 between them is negligible. The second filter plate 110 remains separated from the prism substrate 106 by a gap 114. The light rays 102 and 104 pass through this contact interface and into the first filter plate 108. The plate then modifies the light spectrum and returns the light back to the prism 106 where it further reflects and then passes out of the prism toward the point of focus. Note that the focused image will be laterally shifted because the filter plate has a finite thickness.

Fig. 4 shows the case where the first filter plate 108 is withdrawn, opening the gap 112 sufficiently so that the light rays 102 and 104 reflect from the first wall 150 of the prism 106. The second filter plate 110 is now in contact with the prism 106 so that the light rays 102 and 104 pass through the second prism wall 152 into the second filter 110. The filtered rays reflect from the back surface 158 of the switched in plate and are brought to focus downstream of the prism 106. Note that if the two filter plates are of equal optical thickness, then the lateral shift of the focused image will be the same when either one of the two plates has been switched in.

Figures 2 through 4 have shown three switchable states of the device. In its 'off' condition, it does no filtering. In either of its 'on' conditions, it applies the corresponding wavelength filters. There is also a fourth state in which both filters are switched in. The spectral filtering function will then be the overlap of the two individual filter pass bands. Thus, the basic device has 4 filtering states altogether.

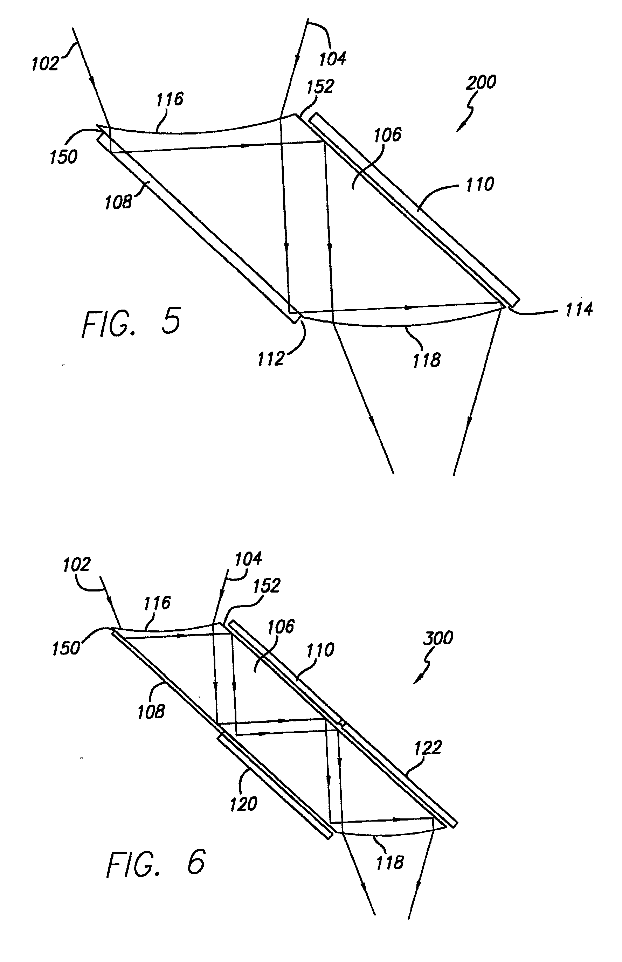

Fig. 5 is a block diagram an alternative embodiment of a switchable filter designed in accordance with the teachings of the present invention. This variation collimates the light at the entrance to the switchable filter. The device 200 is identical to that of Figures 2 through 4, with 2 additions: a collimating lens 116 is built into the entrance to the prism 106, and a refocusing lens 118 is added to the exit of the prism.

There are substantial advantages to using collimated rays. With collimation the device becomes somewhat less sensitive to the angle of incidence of the light. This makes the device easier to design and build, and it gives the device a larger field of view. A further advantage is that it is much easier to cascade devices so as to increase the number of filters that may be switched in or out.

Fig. 6 is a block diagram of an alternative embodiment of the present invention: a two stage cascaded switchable filter. This device 300 uses a single prism substrate 106, but has four filter plates 108, 110, 120, and 122 mounted instead of just two. Two filters 108 and 120 are placed next to each other near a first prism wall 150, and two filters 110 and 122 are placed next to each other near a second prism wall 152 opposite the first wall 150. A collimating lens 116 is built into the entrance to the prism 106, and a refocusing lens 118 is at the exit of the prism. The light rays 102 and 104 undergo four reflections from the prism walls, instead of two. Altogether, this device may have from at least 5 to as many as 16 switched filtering states (i.e. there are 16 possible overlapping combinations of the 4 switched filters).

The moveable filter plate can be made of any thickness. In the preferred embodiment, the filter plate is very thin in order to avoid substantial lateral shift, and also to minimize the size of the device. A thin plate, however, is flexible and easily warped. This would make it difficult for the plate to properly contact the prism over its entire area. The key to frustrated total internal reflection is intimate contact between the entire surface of the filter plate and the prism substrate. A good solution is to reinforce the filter plate with a backing support made of a thick and stiff material. Such backing would require a thin layer of low index of refraction material separating the backing and the filter plate.

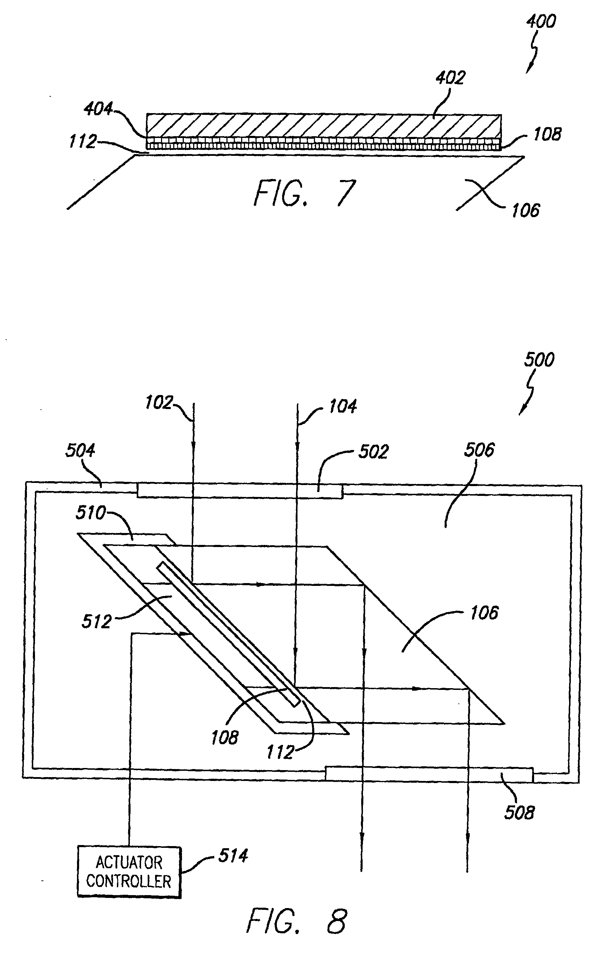

Fig. 7 is a block diagram of an alternative embodiment of the present invention using a stiff support for the filter plate. An interface layer 404 of low index of refraction material is between a filter plate 108 and a stiff support 402. An adjustable gap 112 is between the filter plate 108 and a prism substrate 106.

Two points should be noted about the effects of atmosphere. First, air offers a substantial impediment to bringing the filter plate into contact with the prism substrate, and with separating the filter plate from the prism substrate. The reason is that on the micro scale, air behaves as a highly viscous medium. When the filter plate is brought into contact with the substrate, it becomes necessary to squeeze the air out from under the plate. This becomes progressively harder as the plate comes closer to making contact. Conversely, once the plate has been squeezed against the substrate, it forms a partial vacuum. Because of the air's viscosity, the air will not easily leak back into the gap when attempting to separate the plate from the substrate. The weight of the atmosphere works with the partial vacuum that has been formed within the gap to keep the plate in contact unless a very strong force is used to break the contact. The solution is to use this device only in a vacuum. Thus, the device is certainly appropriate for space satellite sensors. When used in a terrestrial environment, covers can be bonded over the filter sections, and the region under the covers can then be evacuated so that air pressure does not bind the filter plates to the prism substrate.

One method for filter plate actuation is to use piezoelectric actuators. The advantages of piezoelectric devices are that they produce a large force with little current, are very quick, and draw no power when they are not moving. Stacked piezoelectric actuators are coming into common use and could provide a good solution.

Some numbers scope the force needed to move the plate. Suppose the filter plate is 3.5 cm long by 2.5 cm wide by 0.5 cm thick, and has a density of 2.2. Suppose also that the operating wavelength is 5 microns so that the plate must be moved 10 microns away from the prism wall in order that the full internal reflection of the prism will be restored. Then, if this motion takes 1 millisecond, the acceleration will be 2 g's and the required force will be about 0.2 Newtons, or 20 grams of force (in earth acceleration units). This is not a very large force and should be relatively easy to achieve. Note that a visible light filter, which would only need to move about 1 micron, would require 1/10^{th} of this force.

Fig. 8 is a block diagram of an alternative embodiment of a switchable filter with an actuator and vacuum housing designed in accordance with the teachings of the present invention. The system 500 includes a sealed housing 504 with an entrance window 502 for allowing collimated light into the system and an exit window 508 for allowing light to exit the system. The interior 506 of the sealed housing is a vacuum. Located inside the housing 504 are a prism substrate 106 and a switchable optical filter plate 108. A switchable gap 112 lies between the filter plate 108 and the prism substrate 106. The filter plate 108 is connected to a piezoelectric actuator 512, which is attached to a mounting bracket 510. The actuator 512 is driven by an actuator controller 514 located outside of the sealed housing 504. Light rays 102 and 104 enter the system through the entrance window 502 and into the prism substrate 106. The light rays reflect twice off the prism walls and exit the system through the exit window 508. This device has two states: no filtering (when the filter plate 108 is not in contact with the prism substrate 106), and filtering (when the plate 108 is in contact with the substrate 106).

For very small applications, such as for use in an optical fiber configuration, another solution to filter plate actuation is to use micro electro mechanical systems (MEMS) electrostatic actuators.

Thus, the present invention has been described herein with reference to a particular embodiment for a particular application. Those having ordinary skill in the art and access to the present teachings will recognize additional modifications, applications and embodiments within the scope thereof

It is therefore intended by the appended claims to cover any and all such applications, modifications and embodiments within the scope of the present invention.

Accordingly,

## Claims

1. An optical system **characterized by**:
a prism substrate (106);
a moveable filter plate (108) with a switchable gap (112) between said filter plate (108) and a wall (150) of said prism (106); and
a mechanism for moving said filter plate (108) into and out of contact with said prism (106).

2. The invention of Claim 1 wherein said filter plate (108) includes a multilayer spectral filter deposited on a back surface of said plate.

3. The invention of Claim 1 wherein said filter plate (108) includes an absorption filter.

4. The invention of Claim 1 wherein said mechanism for moving said filter plate (108) includes a piezoelectric actuator (512).

5. The invention of Claim 1 wherein said mechanism for moving said filter plate (108) includes a MEMS (micro electro mechanical systems) electrostatic actuator.

6. The invention of Claim 1 wherein said optical system further includes one or more additional moveable filter plates.

7. The invention of Claim 1 wherein said optical system further includes a collimating lens (116) and a refocusing lens (118).

8. The invention of Claim 1 wherein said optical system further includes a mechanism for reinforcing said movable plate (108) such that said plate will remain flat.

9. The invention of Claim 8 wherein said mechanism for reinforcing said movable plate (108) includes a support (402) made of a thick and stiff material attached to said moveable plate (108) with a layer (404) made of low index of refraction between said support (402) and said plate (108).

10. The invention of Claim 1 wherein said optical system further includes a mechanism for keeping said system in a vacuum.
